# EUROPÄISCHE PATENTSCHRIFT

(11) **EP 0 922 116 B1**
(45) Veröffentlichungstag und Bekanntmachung des Hinweises auf die Patenterteilung: **04.10.2001**
(21) Anmeldenummer: 97926909.9
(22) Anmeldetag: 19.06.1997
(51) Int. Cl.: C21B 13/14, C21B 13/00

(54) **EINSCHMELZVERGASER FÜR DIE HERSTELLUNG EINER METALLSCHMELZE**
MELTING GASIFIER FOR PRODUCING MOLTEN METALS
GAZEIFICATEUR POUR LA FONTE DE METAUX

(30) Priorität: 20.06.1996 AT 110096
(43) Veröffentlichungstag der Anmeldung: 16.06.1999
(73) Patentinhaber: VOEST-ALPINE INDUSTRIEANLAGENBAU GESELLSCHAFT m.b.H., A-4020 Linz (AT); POHANG IRON & STEEL CO., LTD., Pohang City, Kyong Sang Book-Do 790-785 (KR); Research Institute of Industrial Science and Technology, Incorporated Foundation, Pohang City (KR)
(72) Erfinder: ZSCHETZSCHE, Albert, A-4020 Linz (AT)
(74) Vertreter: Kopecky, Helmut, Dipl.-Ing.
(86) Internationale Anmeldenummer: AT9700133
(87) Internationale Veröffentlichungsnummer: WO9748825

(56) Entgegenhaltungen:
- DE-B- 1 154 817
- GB-A- 1 090 826

## Beschreibung

Die Erfindung betrifft einen Einschmelzvergaser für die Herstellung einer Metallschmelze, vorzugsweise einer Roheisenschmelze, aus zumindest teilreduzierten und einen Feinanteil aufweisenden Metallträgern, insbesondere Eisenschwamm, und eines Reduktionsgases durch Kohlevergasung, in welchen Einschmelzvergaser Zuleitungen für sauerstoffhältige Gase, Kohlenstoffträger und die Metallträger münden, welche Zuleitungen für sauerstoffhältige Gase im unteren Bereich des Einschmelzvergasers angeordnet sind, wobei vom Einschmelzvergaser mindestens eine Gasableitung für im Einschmelzvergaser erzeugtes Reduktionsgas ausgeht, und der Einschmelzvergaser einen Abstich für die Metallschmelze und für Schlacke aufweist.

Aus der EP-B - 0 010 627 ist es bekannt, teilchenförmiges eisenhältiges Material, wie vorreduzierten Eisenschwamm, durch eine zentrale Chargieröffnung in der Haube des Einschmelzvergasers von oben zuzuführen, wobei die Teilchen in den Einschmelzvergaser durch Gravitationswirkung hineinfallen und im im Einschmelzvergaser vorhandenen Fließbett abgebremst werden. Stückige Kohle wird durch eine seitlich in der Haube des Einschmelzvergasers bzw. im den Einschmelzvergaser nach oben hin abschließenden Dom angeordnete Chargieröffnung eingebracht, u.zw. ebenfalls unter Gravitationswirkung. Das im Einschmelzvergaser gebildete Reduktionsgas wird durch die zentrale Chargieröffnung für das eisenhältige Material abgezogen.

Ein Verfahren dieser Art ist für die Verarbeitung von feinteiligen Metallträgern, insbesondere von feinteiligem Eisenschwamm, nicht geeignet, da die feinteiligen Metallträger infolge der starken Gasströmung des in der Einschmelzvergasungszone gebildeten Reduktionsgases, das durch die zentrale Chargieröffnung in der Haube bzw. im Dom des Einschmelzvergasers abgezogen wird, sofort aus dem Einschmelzvergaser ausgetragen werden würden. Ein solches Austragen der feinteiligen Metallträger wird noch durch die Temperatur im oberen Bereich des Einschmelzvergasers, d.h. im Bereich oberhalb der Einschmelzvergasungszone, begünstigt, da diese zu nieder ist, um ein Einschmelzen, d.h. ein Agglomerieren der Feinteilchen am Ort der Einbringung zu größeren Teilchen, die in die Einschmelzvergasungszone trotz des aufwärts strömenden Gases absinken könnten, sicherzustellen.

Aus der EP-A - 0 217 331 ist es bekannt, vorreduziertes Feinerz in einen Einschmelzvergaser zu leiten und mittels eines Plasmabrenners unter Zuführung kohlenstoffhältigen Reduktionsmittels fertigzureduzieren und aufzuschmelzen. Das vorreduzierte Feinerz bzw. das Eisenschwamm-Pulver wird einem im unteren Abschnitt des Einschmelzvergasers vorgesehenen Plasmabrenner zugeführt. Nachteilig ist hierbei, daß durch die Zuführung des vorreduzierten Feinerzes unmittelbar im unteren Einschmelzbereich, d.h. im Bereich der Schmelzenansammlung, ein Fertigreduzieren nicht mehr sichergestellt ist und auf keinen Fall die für eine Weiterverarbeitung des Roheisens nötige chemische Zusammensetzung erreicht werden kann. Zudem ist die Einbringung großer Mengen vorreduzierten Feinerzes wegen des im unteren Bereich des Einschmelzvergasers sich aus Kohle bildenden Fließbettes bzw. Festbettes nicht möglich, da eine ausreichende Abfuhr der Schmelzprodukte aus der Hochtemperaturzone des Plasmabrenners nicht möglich ist. Das Einbringen größerer Mengen vorreduzierten Feinerzes würde sofort zu einem thermischen und mechanischen Versagen des Plasmabrenners führen.

Aus der EP-B - 0 111 176 ist es bekannt, eine Feinkomfraktion von Eisenschwammpartikeln in den Einschmelzvergaser über ein Fallrohr zuzuleiten, das vom Kopf des Einschmelzvergasers bis in die Nähe des Kohlefließbettes ragt. Am Ende des Fallrohres ist eine Prallplatte zur Geschwindigkeitsminimierung der Feinkomfraktion vorgesehen, wodurch die Austrittsgeschwindigkeit der Feinkomfraktion aus dem Fallrohr sehr gering ist. An der Stelle der Einbringung ist die im Einschmelzvergaser herrschende Temperatur sehr niedrig, wodurch es nicht zu einem sofortigen Aufschmelzen der zugeführten Feinkomfraktion kommen kann. Dies und die niedrige Austrittsgeschwindigkeit aus dem Fallrohr bedingt, daß ein beträchtlicher Anteil der zugeführten Feinkomfraktion mit dem im Einschmelzvergaser erzeugten Reduktionsgas aus diesem weider ausgetragen wird. Das Einbringen einer größeren Menge von einen Feinanteil enthaltenden Eisenschwammpartikeln bzw. ausschließlich einer Feinkornfraktion ist gemäß diesem Verfahren nicht möglich.

Aus der EP-A - 0 594 557 ist es bekannt, eine Feinkornfraktion von Eisenschwamm mittels eines Fördergases direkt in das im Einschmelzvergaser von der Einschmelzvergasungszone gebildete Fließbett einzubringen. Dies ist jedoch nachteilig, da hierdurch die Durchgasung des Fließbettes gestört werden kann, denn es kann zu Verstopfungen des wie ein Filter wirkenden Fließbettes infolge der direkt in das Fließbett eingeblasenen Feinkornfraktion kommen. Als Folge davon kann es zu eruptiven Gasdurchbrüchen, die das verstopfte Fließbett aufbrechen, kommen. Hierdurch wird der Vergasungsprozeß für die Kohlenstoffträger und auch der Einschmelzprozeß für das reduzierte Eisenerz stark gestört.

Aus der EP-A - 0 576 414 ist es bekannt, feinteilige Metallträger in die Einschmelzvergasungszone über Staubbrenner zuzuführen. Hierbei ergibt sich eine geringe Einschmelzleistung durch kurze Verweilzeit der Teilchen in heißer Flamme.

In der DE-B-11 54 817 ist ein Verfahren beschrieben, bei dem feinzerkleinertes Eisenerz und Flußmittel sowie Brennstoff und Sauerstoff und/oder Luft durch einen Brenner in eine Reaktionskammer geleitet werden. Der Brenner ist mit einer Ausgangsöffnung an der Spitze von ionisch sich verengenden Schrägwänden ausgebildet, wobei zentral oberhalb der Spitze die zu reduzierenden Metallträger zugeführt werden. Hierbei wird zunächst eine stark oxidierende Brennerflamme erzeugt, und die Reaktionsteilnehmer werden bis zum Schmelzen erhitzt. Anschließend wird auf die Flamme zur weiteren reduzierenden Führung Brennstoff geblasen. Die Flamme ist auf eine in einer Schmelzkammer befindliche Schmelze gerichtet.

Die Erfindung bezweckt die Vermeidung der oben angeführten Nachteile und Schwierigkeiten und stellt sich die Aufgabe, einen Einschmelzvergaser der eingangs beschriebenen Art zu schaffen, der ein Verarbeiten von feinteilchenförmigen Metallträgern, ohne ein Brikettieren zu erfordern, gestattet und hierbei einerseits ein Austragen der zugeführten Feinteilchen, gegebenenfalls im vorreduzierten oder im fertigreduzierten Zustand, durch das im Einschmelzvergaser erzeugte Reduktionsgas zuverlässig vermieden wird und andererseits ein gegebenenfalls erforderliches Fertigreduzieren der Feinteilchen gesichert ist. Weiters soll erfindungsgemäß eine möglichst gleichmäßige Verteilung der Metallträger und der Kohlenstoffträger im Fließbett der Einschmelzvergasungszone erreicht werden.

Diese Aufgabe wird erfindungsgemäß dadurch gelöst, daß mindestens eine die Metallträger zuführende Zuleitung im Bereich, vorzugsweise im Zentralbereich, eines den Einschmelzvergaser nach oben hin abschließenden Domes angeordnet ist und daß im Inneren des Einschmelzvergasers unterhalb der Einmündung der Zuleitung für die Metallträger eine feuerfeste, zur Vertikalen geneigte Schrägwand angeordnet ist, an der die durch Gravitationswirkung absinkenden Metallträger auftreffen, und daß oberhalb der Schrägwand eine Heizeinrichtung, vorzugsweise ein Kohlebrenner, vorgesehen ist, mit der der Bereich zwischen der Einmündung der Zuleitung für die Metallträger und der Schrägwand beheizbar ist.

Hierdurch fallen die Metallträger auf die geneigte Schrägwand und rutschen an ihr entlang. Durch die Heizeinrichtung wird der Bereich zwischen der Schrägwand und dem Dom des Einschmelzvergasers über der Schmelztemperatur der Metallträger gehalten, und es können die Metallträger, die durch das Auftreffen und Entlangrutschen auf bzw. an der Schrägwand abgebremst werden, teilweise aufschmelzen und agglomerieren. Die so gebildeten Agglomerate sinken trotz des aus dem Einschmelzvergaser im Dombereich austretenden starken Reduktionsgasstromes zur von einem Fließbett gebildeten Einschmelzvergasungszone und durchwandern diese, wobei sie zur Gänze aufgeschmolzen werden. Ein Austragen der feinteiligen Metallträger aus dem Einschmelzvergaser wird wirkungsvoll vermieden.

Gemäß einer bevorzugten Ausführungsform ist die Schrägwand als Mantelwand eines mit der Spitze nach unten gerichteten Kegel- oder Pyramidenstumpfes ausgebildet und sind im Dom des Einschmelzvergasers mehrere Zuleitungen für die Metallträger vorgesehen, die sämtliche im Bereich vertikal oberhalb der Mantelwand angeordnet und gegen die Innenseite der Mantelwand gerichtet sind. Die Mantelwand umschließt hierbei einen Raum, der als Brennkammer angesehen werden kann. Er ist vom übrigen Freiraum des Einschmelzvergasers räumlich getrennt, wodurch der Energieeintrag zum teilweisen Aufschmelzen bzw. Agglomerieren der Metallträger minimiert werden kann.

Zur Erzeugung einer gleichmäßigen Temperatur in der so gebildeten Brennkammer sind vorzugsweise weiters oberhalb der Mantelwand mehrere Heizeinrichtungen vorgesehen, wobei zweckmäßig die Heizeinrichtungen zwischen den Austrittsöffnungen der Zuleitungen für die Metallträger und dem Ansatz der Mantelwand am Dom des Einschmelzvergasers vorgesehen sind.

Zum Chargieren von stückiger Kohle ist vorzugsweise zentral im Dombereich eine Zuleitung vorgesehen, die oberhalb der unteren Öffnung der Mantelwand angeordnet ist. Hierdurch kann der Aufbau des Fließbettes im Zentrum des Einschmelzvergasers optimiert werden, wobei zweckmäßig zusätzlich außerhalb des vertikal oberhalb der Mantelwand befindlichen Bereiches weitere Zuleitungen für stückige Kohlenstoffträger und gegebenenfalls für vorreduzierte Eisenträger vorgesehen sind.

Die Erfindung ist insbesondere für eine Anlage zum Herstellen von Metallschmelzen, insbesondere Roheisen, aus von Erz, insbesondere Eisenerz, und Zuschlägen gebildeten, zumindest einen Feinanteil aufweisenden Einsatzstoffen geeignet, die gekennzeichnet ist
- durch mindestens zwei hintereinander in Serie geschaltete Wirbelschichtreaktoren, wobei das Erz von Wirbelschichtreaktor zu Wirbelschichtreaktor über Förderleitungen in einer Richtung und Reduktionsgas von Wirbelschichtreaktor zu Wirbelschichtreaktor über Reduktionsgas-Verbindungsleitungen in die entgegengesetzte Richtung geführt ist, und
- durch einen Einschmelzvergaser, in den eine das Reduktionsprodukt aus dem in Fließrichtung des Erzes letztangeordneten Wirbelschichtreaktor führende Zuleitung mündet und dessen Gasableitung in den in Fließrichtung des Erzes letztangeordneten Wirbelschichtreaktor mündet.

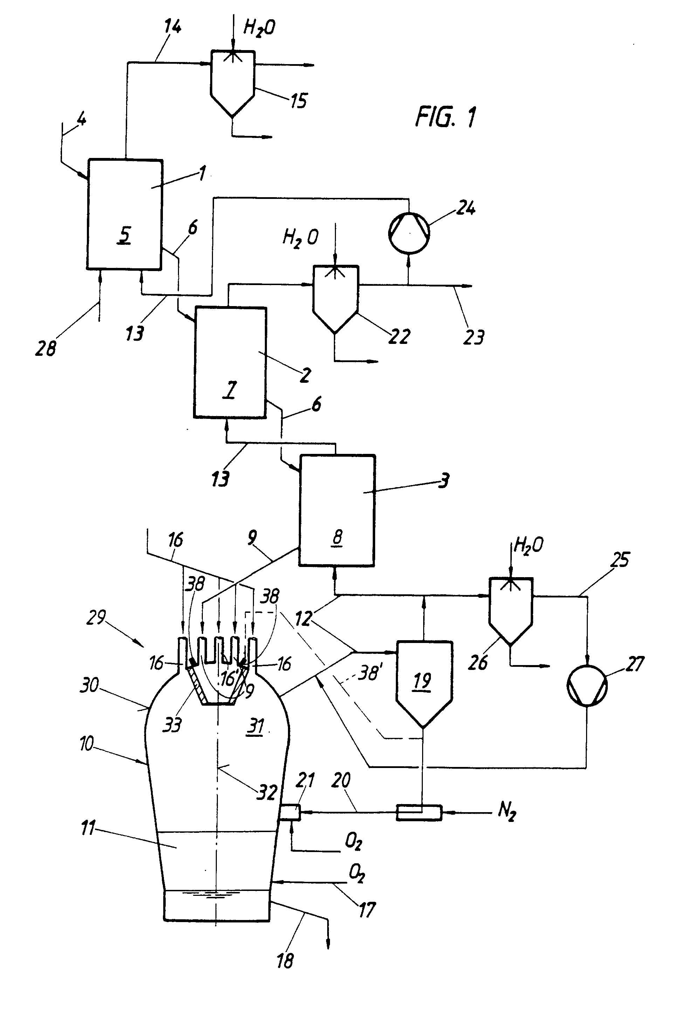

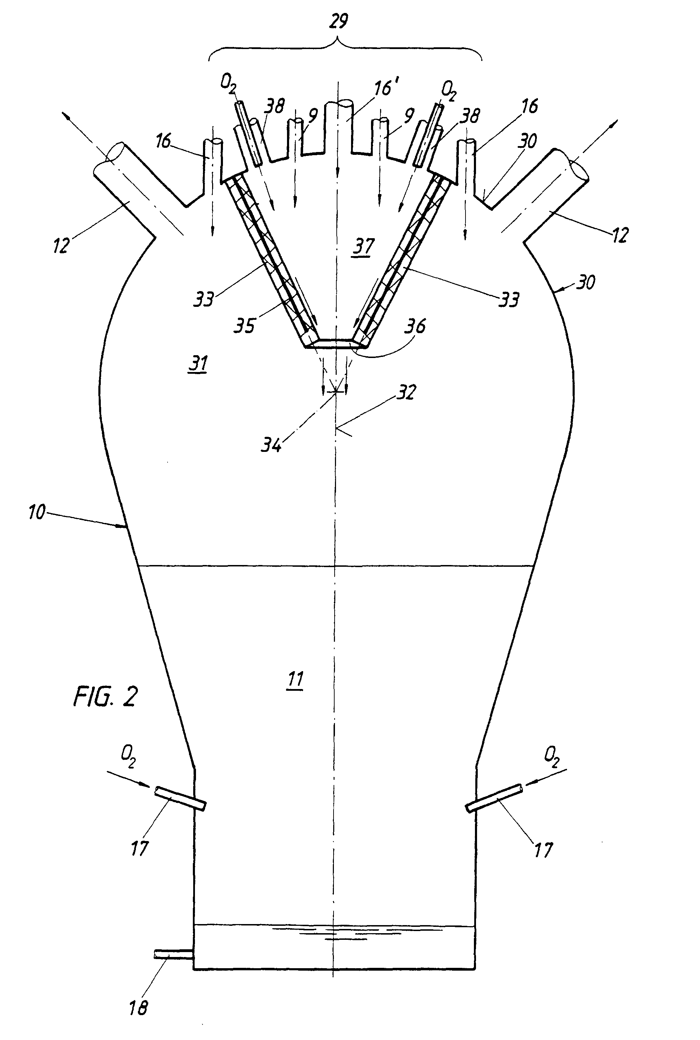

Die Erfindung ist nachfolgend anhand eines in der Zeichnung dargestellten Ausführungsbeispieles näher erläutert, wobei Fig. 1 beispielhaft eine Gesamtanlage zum Herstellen von Metallschmelzen, insbesondere Roheisen, oder flüssigen Stahlvorprodukten in schematischer Darstellung zeigt. Fig. 2 veranschaulicht ein Detail der Fig. 1 in vergrößertem Maßstab.

Die Anlage nach Fig. 1 weist drei in Serie hintereinander geschaltete Wirbelschichtreaktoren 1 bis 3 auf, wobei ein zumindest einen Feinkornanteil aufweisendes eisenoxidhältiges Material, wie Feinerz, über eine Erzzuleitung 4 dem ersten Wirbelschichtreaktor 1, in dem in einer Vorwärmstufe 5 eine Vorerwärmung des Feinerzes und eventuell eine Vorreduktion stattfindet, zugeleitet und anschließend von Wirbelschichtreaktor 1 zu Wirbelschichtreaktor 2, 3 über Förderleitungen 6 geleitet wird. In dem Wirbelschichtreaktor 2 erfolgt in einer Vor-Reduktionsstufe 7 eine Vorreduktion und im Wirbelschichtreaktor 3 in einer End-Reduktionsstufe 8 eine End- bzw. Fertig-Reduktion des Feinerzes zu Eisenschwamm.

Das fertigreduzierte Material, also der Eisenschwamm, wird über eine Förderleitung 9 in einen Einschmelzvergaser 10 geleitet, u.zw. in einer bestimmten Art und Weise, wie sie später noch beschrieben wird. Im Einschmelzvergaser 10 wird in einer von einem Fließbett gebildeten Einschmelzvergasungszone 11 aus Kohlenstoffträgern, wie Kohle, und sauerstoffhältigem Gas ein CO- und H₂-hältiges Reduktionsgas erzeugt, das über die Reduktionsgas-Zuleitung 12 in den in Fließrichtung des Feinerzes letztangeordneten Wirbelschichtreaktor 3 eingeleitet wird. Das Reduktionsgas wird dann im Gegenstrom zum Erzdurchfluß von Wirbelschichtreaktor 3 zu Wirbelschichtreaktor 2 bis 1 geführt, u.zw. über die Verbindungsleitungen 13, aus dem Wirbelschichtreaktor 1 als Topgas über eine Topgas-Ableitung 14 abgeleitet und anschließend in einem Naßwäscher 15 gekühlt und gewaschen.

Der Einschmelzvergaser 10 weist eine Zuführung 16 für feste Kohlenstoffträger, eine Zuführung 17 für sauerstoffhältige Gase sowie gegebenenfalls Zuführungen für bei Raumtemperatur flüssige oder gasförmige Kohlenstoffträger, wie Kohlenwasserstoffe, sowie für gebrannte Zuschläge auf. In dem Einschmelzvergaser 10 sammelt sich unterhalb der Einschmelzvergasungszone 11 schmelzflüssiges Roheisen bzw. schmelzflüssiges Stahlvormaterial und schmelzflüssige Schlacke, die über einen Abstich 18 abgestochen werden.

In der Reduktionsgas-Zuleitung 12, die vom Einschmelzvergaser 10 ausgeht und in den Wirbelschichtreaktor 3 mündet, ist eine Entstaubungseinrichtung 19, wie ein Heißgaszyklon, vorgesehen, wobei die in diesem Zyklon abgeschiedenen Staubteile dem Einschmelzvergaser 10 über die Rückleitung 20 mit Stickstoff als Fördermittel und über einen Brenner 21 unter Einblasen von Sauerstoff zugeführt werden.

Der Wirbelschichtreaktor 2, in dem die Vorreduktion des Feinerzes stattfindet, wird mit einer viel geringeren Menge an Reduktionsgas, das zudem ein geringeres Reduktionspotential aufweist, versorgt, was jedoch für die Vor-Reduktion durchaus ausreichend ist. Da hier der erreichte Reduktionsgrad des zu reduzierenden Materials niedriger ist als in der End-Reduktionsstufe 8, tritt hier kein "sticking" auf. Das aus dem Wirbelschichtreaktor 2 austretende umgesetzte Reduktionsgas wird über die Leitung 13 einem Wäscher 22 zugeführt.

Ein Teil des gewaschenen umgesetzten Reduktionsgases wird über eine Exportgas-Ableitung 23 abgezogen; ein anderer Teil der Vorerwärmungsstufe 5, d.h. dem Wirbelschichtreaktor 1, über die Leitung 13 über einen Verdichter 24 zugeführt.

Eine Möglichkeit zur Einstellung der Reduktionsgastemperatur ergibt sich durch die vorzugsweise vorgesehene Gasrückführleitung 25, die von der Reduktionsgas-Zuleitung 12 ausgeht und einen Teil des Reduktionsgases über einen Wäscher 26 und einen Verdichter 27 in diese Reduktionsgas-Zuleitung 12 wiederum zurückführt, u.zw. vor der Anordnung des Heißgaszyklons 19.

Zur Einstellung der Vorerwärmungstemperatur des Feinerzes kann der Vorerwärmungsstufe 5, also dem Wirbelschichtreaktor 1, ein sauerstoffhältiges Gas, wie Luft oder Sauerstoff, über eine Leitung 28 zugeführt werden, wodurch eine Teilverbrennung des der Vorerwärmungsstufe 5 zugeführten umgesetzten Reduktionsgases stattfindet.

Erfindungsgemäß erfolgt die Chargierung des Eisenschwammes und der Kohlenstoffträger über eine eigene Chargiereinrichtung 29, die in Fig. 2 vergrößert dargestellt ist.

Die Chargiereinrichtung 29 weist zentral im Inneren 31 des den Einschmelzvergaser 10 nach oben hin abschließenden Domes 30 eine zur Vertikalachse 32 des Einschmelzvergasers geneigt angeordnete Schrägwand 33 auf, die gemäß dem dargestellten bevorzugten Ausführungsbeispiel als Mantelwand eines Kegel- oder Pyramidenstumpfes ausgebildet ist. Die Spitze 34 des Kegel- bzw. Pyramidenstumpfes liegt auf der Vertikal- bzw. Längsmittelachse 32 des Einschmelzvergasers 10. Die Mantelwand 33 ist aus feuerfestem Material gefertigt und gegebenenfalls im Inneren mittels einer Stützkonstruktion 35 verstärkt. Diese Stützkonstruktion 35 kann von einem Stahlblechmantel gebildet sein.

Im Bereich der auf den Dom 30 des Einschmelzvergasers 10 in Richtung der Längsmittelachse 32 projizierten Fläche der Mantelwand 33 münden Zuleitungen 9 für den Eisenschwamm in den Einschmelzvergaser 10. Die über diese Zuleitungen 9 in den Einschmelzvergaser 10 infolge Schwerkraftwirkung abwärts fallenden Partikel des Eisenschwammes treffen auf die Mantelwand 33 und fließen, wie durch Pfeile angedeutet, über diese Mantelwand 33 zur unteren gegen die Einschmelzvergasungszone 11 gerichteten Öffnung 36 der Mantelwand 33, treten durch diese aus und sinken bis zum Fließbett der Einschmelzvergasungszone 11, u.zw. entgegen der aufwärts gerichteten Strömung des im Einschmelzvergaser 10 erzeugten Reduktionsgases, treten durch die Einschmelzvergasungszone 11 hindurch und werden dort aufgeschmolzen.

Der von der Mantelwand 33 eingeschlossene Bereich 37 wird mittels Heizeinrichtungen 38, die vorzugsweise als Brenner mit feiner Kohle und Sauerstoff betrieben werden, aufgeheizt. Die Brenner 38 halten die Temperatur in dem von der Mantelwand 33 eingeschlossenen Bereich 37, der als Brennkammer angesprochen werden kann, über der Schmelztemperatur des Eisenschwammes. Hierdurch kommt es zu einem Agglomerieren und teilweisen Aufschmelzen der Partikel des Eisenschwammes, so daß die hierdurch aus den Feinteilchen gebildeten größeren Teilchen trotz der starken Gegenströmung des Reduktionsgases bis zum Fließbett der Einschmelzvergasungszone gelangen und nicht mit dem Reduktionsgas ausgetragen werden können.

Über die Brenner 38 kann auch eine Staubrückführung in den Einschmelzvergaser 10 stattfinden; beispielsweise kann aus der Entstaubungseinrichtung 19 stammender Staub in den Einschmelzvergaser 10 rückgeführt werden, und zwar über die Leitung 38'.

Dadurch, daß der Eisenschwamm auf die Schrägwand 33 auftrifft und diese entlangrutscht, wird er abgebremst, und es bleibt genügend Zeit, daß die in der Brennkammer 37 herrschende hohe Temperatur tatsächlich ein Agglomerieren bewirkt. Die Bildung einer Brennkammer 37 gemäß dem dargestellten Ausführungsbeispiel ist nicht unbedingt notwendig. So könnte auch eine einzelne ebene Schrägwand vorgesehen sein, auf die das Feingut auftrifft, jedoch hat die Brennkammer den Vorteil, daß der Energieeintrag minimiert werden kann und trotzdem ein effizientes Agglomerieren bzw. ein teilweises Aufschmelzen der feinen Partikel des Eisenschwammes erzielt wird. Weiters könnten mehrere Schrägwände 33 im Dom 30 des Einschmelzvergasers 10 vorgesehen sein.

Kohlenstoffträger, wie Kohle, werden über radial außerhalb der Mantelwand 33 in den Bereich des Domes 30 des Einschmelzvergasers 10 mündende Zuleitungen 16 zugeführt. Stückige Kohle kann auch durch die von der Mantelwand 33 gebildete Brennkammer 37 in den Einschmelzvergaser 10 eingebracht werden, beispielsweise durch eine zentral angeordnete Einmündung einer weiteren Zuleitung 16' für stückige Kohlenstoffträger sowie gegebenenfalls für vorreduzierte Eisenträger. Durch diese Anordnung der Zuleitungen 16, 16' für die Kohlenstoffträger gelingt es, den Aufbau des Fließbettes zu optimieren, so daß der Eisenschwamm über den Querschnitt des Fließbettes etwa gleichmäßig verteilt wird.

## Patentansprüche

1. Einschmelzvergaser (10) für die Herstellung einer Metallschmelze, vorzugsweise einer Roheisenschmelze, aus zumindest teilreduzierten und einen Feinanteil aufweisenden Metallträgern, insbesondere Eisenschwamm, und eines Reduktionsgases durch Kohlevergasung, in welchen Einschmelzvergaser (10) Zuleitungen (17, 16, 9) für sauerstoffhältige Gase, Kohlenstoffträger und die Metallträger münden, welche Zuleitungen (17) für sauerstoffhältige Gase im unteren Bereich des Einschmelzvergasers (10) angeordnet sind, wobei vom Einschmelzvergaser (10) mindestens eine Gasableitung (12) für im Einschmelzvergaser (10) erzeugtes Reduktionsgas ausgeht, und der Einschmelzvergaser (10) einen Abstich (18) für die Metallschmelze und für Schlacke aufweist, **dadurch gekennzeichnet, daß** mindestens eine die Metallträger zuführende Zuleitung (9) im Bereich, vorzugsweise im Zentralbereich, eines den Einschmelzvergaser (10) nach oben hin abschließenden Domes (30) angeordnet ist und **daß** im Inneren (31) des Einschmelzvergasers (10) unterhalb der Einmündung der Zuleitung (9) für die Metallträger eine feuerfeste, zur, Vertikalen geneigte Schrägwand (33) angeordnet ist, an der die durch Gravitationswirkung absinkenden Metallträger auftreffen, und **daß** oberhalb der Schrägwand (33) eine Heizeinrichtung (38), vorzugsweise ein Kohlebrenner, vorgesehen ist, mit der der Bereich zwischen der Einmündung der Zuleitung (9) für die Metallträger und der Schrägwand (33) beheizbar ist.

2. Einschmelzvergaser nach Anspruch 1, **dadurch gekennzeichnet, daß** die Schrägwand (33) als Mantelwand (33) eines mit der Spitze (34) nach unten gerichteten Kegel- oder Pyramidenstumpfes ausgebildet ist und **daß** im Dom (30) des Einschmelzvergasers (10) mehrere Zuleitungen (9) für die Metallträger vorgesehen sind, die sämtliche im Bereich vertikal oberhalb der Mantelwand (33) angeordnet und gegen die Innenseite der Mantelwand (33) gerichtet sind.

3. Einschmelzvergaser nach Anspruch 2, **dadurch gekennzeichnet, daß** weiters oberhalb der Mantelwand (33) mehrere Heizeinrichtungen (38) vorgesehen sind.

4. Einschmelzvergaser nach Anspruch 3, **dadurch gekennzeichnet, daß** die Heizeinrichtungen (38) zwischen den Austrittsöffnungen der Zuleitungen (9) für die Metallträger und dem Ansatz der Mantelwand (33) am Dom (30) des Einschmelzvergasers (10) vorgesehen sind.

5. Einschmelzvergaser nach einem oder mehreren der Ansprüche 2 bis 4, **dadurch gekennzeichnet, daß** zentral im Dom (30) eine Zuleitung (16') für stückige Kohlenstoffträger vorgesehen ist, die oberhalb der unteren Öffnung (36) der Mantelwand (33) angeordnet ist.

6. Einschmelzvergaser nach Anspruch 5, **dadurch gekennzeichnet, daß** zusätzlich außerhalb des vertikal oberhalb der Mantelwand (33) befindlichen Bereiches weitere Zuleitungen (16) für stückige Kohlenstoffträger und gegebenenfalls für vorreduzierte Eisenträger vorgesehen sind.

7. Anlage zum Herstellen von Metallschmelzen, insbesondere Roheisen, aus von Erz, insbesondere Eisenerz, und Zuschlägen gebildeten, zumindest teilweise einen Feinanteil aufweisenden Einsatzstoffen, **gekennzeichnet**
• durch mindestens zwei hintereinander in Serie geschaltete Wirbelschichtreaktoren (1 bis 3), wobei das Erz von Wirbelschichtreaktor (1) zu Wirbelschichtreaktor (2, 3) über Förderleitungen (6) in einer Richtung und Reduktionsgas von Wirbelschichtreaktor (3) zu Wirbelschichtreaktor (2, 1) über Reduktionsgas-Verbindungsleitungen (13) in die entgegengesetzte Richtung geführt ist, und
• durch einen Einschmelzvergaser (10) nach Anspruch 1, in den eine das Reduktionsprodukt aus dem in Fließrichtung des Erzes letztangeordneten Wirbelschichtreaktor (3) führende Zuleitung (9) mündet und dessen Gasableitung (12) in den in Fließrichtung des Erzes letztangeordneten Wirbelschichtreaktor (3) mündet (Fig. 1).

## Claims

1. A melter gasifier (10) for the production of a metal melt, preferably a pig iron melt, from metal carriers, in particular sponge iron, which are at least partially reduced and contain a portion of fines, and of a reducing gas by gasification of coal, with feed ducts (17, 16, 9) for oxygen-containing gases, carbon carriers and the metal carriers running into said melter gasifier (10), which feed ducts (17) for oxygen-containing gases are arranged in the lower region of the melter gasifier (10), wherein at least one gas discharge duct (12) for reducing gas generated in the melter gasifier (10) departs from the melter gasifier (10) and the melter gasifier (10) has a tap (18) for the metal melt and for slag, **characterized in that** at least one feed duct (9) feeding the metal carriers is arranged in the region, preferably the central region, of a dome (30) terminating the melter gasifier (10) toward the top, and that in the interior (31) of the melter gasifier (10) below the entry site of the feed duct (9) for the metal carriers a refractory slanting wall (33) is arranged that is inclined relative to the vertical line and on which there impinge the metal carriers sinking downward due to gravitational forces, and that above the slanting wall (33) a heating means (38), preferably a coal burner, is provided, by which the area between the entry site of the feed duct (9) for the metal carriers and the slanting wall (33) may be heated.

2. A melter gasifier according to claim 1, **characterized in that** the slanting wall (33) is constructed as an enveloping wall (33) of a truncated cone or pyramid having an apex (34) that is directed downward, and that several feed ducts (9) for the metal carriers are provided in the dome (30) of the melter gasifier (10), all of them being arranged in the region located vertically above the enveloping wall (33) and being directed toward the inner side of the enveloping wall (33).

3. A melter gasifier according to claim 2, **characterized in that**, further, several heating means (38) are provided above the enveloping wall (33).

4. A melter gasifier according to claim 3, **characterized in that** the heating means (38) are provided between the outlets of the feed ducts (9) for the metal carriers and the region where the enveloping wall (33) departs at the dome (30) of the melter gasifier (10).

5. A melter gasifier according to one or several of claims 2 to 4, **characterized in that** a feed duct (16') for lumpy carbon carriers is provided centrally in the dome (30) and is arranged above the lower opening (36) of the enveloping wall (33).

6. A melter gasifier according to claim 5, **characterized in that**, in addition, further feed ducts (16) for lumpy carbon carriers and optionally for pre-reduced iron carriers are provided outside of the region located vertically above the enveloping wall (33).

7. A plant for the production of metal melts, particularly pig iron, from charging substances formed of ore, in particular iron ore, and of fluxes and at least partially containing a portion of fines, **characterized**
• by at least two fluidized bed reactors (1 to 3) subsequently connected in series, wherein the ore is conducted from fluidized bed reactor (1) to fluidized bed reactor (2, 3) via conveying ducts (6) in one direction and reducing gas is conducted from fluidized bed reactor (3) to fluidized bed reactor (2, 1) via reducing-gas connecting ducts (13) in the opposite direction, and
• by a melter gasifier (10) according to claim 1, into which there runs a feed duct (9) conducting the reduction product from the fluidized bed reactor (3) arranged last in the direction of the ore flow, and the gas discharge duct (12) of which runs into the fluidized bed reactor (3) arranged last in the direction of the ore flow (Fig. 1).

## Revendications

1. Gazéificateur de fusion (10) pour la production d'un métal en fusion, de préférence une fonte de fer brut, à partir de produits d'apport de métal au moins partiellement réduits et comprenant une proportion de fines, en particulier de la mousse de fer, et d'un gaz de réduction, par gazéification de charbon, gazéificateur de fusion (10) dans lequel débouchent des conduites (17, 16, 9) pour des gaz contenant de l'oxygène, pour des produits d'apport de carbone et pour les produits d'apport de métal, lesdites conduites (17) pour des gaz contenant de l'oxygène étant agencées dans la région inférieure du gazéificateur de fusion (10), et depuis le gazéificateur de fusion (10) part au moins une sortie de gaz (12) pour le gaz de réduction engendré dans le gazéificateur de fusion (10), et le gazéificateur fusion (10) comprend une piquée (18) pour la fonte de métal et pour le laitier, **caractérisé en ce que** l'une au moins des conduites (9) qui amène les produits d'apport de métal est agencée dans la région d'une coupole (30) qui referme le gazéificateur de fusion (10) vers le haut, et de préférence dans la région centrale, et **en ce qu'**il est prévu à l'intérieur (31) du gazéificateur de fusion (10) une paroi oblique (33) réfractaire agencée de façon inclinée par rapport à la verticale au-dessous de l'embouchure de la conduite d'amenée (9) pour les produits d'apport de métal, paroi sur laquelle parviennent les produits d'apport de métal qui descendent sous l'effet de la gravité, et **en ce qu'**il est prévu au-dessus de la paroi oblique (33) un dispositif de chauffage (38), de préférence un brûleur à charbon, au moyen duquel la région entre l'embouchure de la conduite d'amenée (9) pour les produits d'apport de métal et la paroi oblique (33) peut être réchauffée.

2. Gazéificateur de fusion selon la revendication 1, **caractérisé en ce que** la paroi oblique (33) est réalisée sous forme de paroi enveloppe (33) d'un tronc de cône ou de pyramide dont la pointe (34) est dirigée vers le bas, et **en ce qu'**il est prévu dans la coupole (30) du gazéificateur de fusion (10) plusieurs conduites (9) d'amenée pour les produits d'apport de métal, qui sont toutes agencées dans la région verticalement au-dessus de la paroi enveloppe (33) et dirigées contre la face intérieure de la paroi enveloppe (33).

3. Gazéificateur de fusion selon la revendication 2, **caractérisé en ce qu'**il est prévu plusieurs dispositifs de chauffage (38) plus loin au-dessus de la paroi enveloppe (33).

4. Gazéificateur de fusion selon la revendication 3, **caractérisé en ce que** les dispositifs de chauffage (38) sont prévus entre les ouvertures de sortie des conduites (9) d'amenée pour les produits d'apport de métal et la souche de la paroi enveloppe (33) au niveau de la coupole (30) du gazéificateur de fusion (10).

5. Gazéificateur de fusion selon l'une ou plusieurs des revendications 2 à 4, **caractérisé en ce qu'**il est prévu une conduite d'amenée (16') pour des produits d'apport de carbone en morceaux, agencée de façon centrale dans la coupole (30) et au-dessus de l'ouverture inférieure (36) de la paroi enveloppe (33).

6. Gazéificateur de fusion selon la revendication 5, **caractérisé en ce qu'**il est prévu additionnellement à l'extérieur de la région qui se trouve verticalement au-dessus de la paroi enveloppe (33) d'autres conduites d'amenée (16) pour des produits d'apport de carbone en morceaux, et le cas échéant pour des produits d'apport de fer préalablement réduits.

7. Installation pour la production de métal en fusion, en particulier de fonte de fer brut, à partir de produits de départ comprenant du minerai, en particulier du minerai de fer, et des additifs, comportant au moins partiellement une proportion de fines, **caractérisée par** :
- au moins deux réacteurs à lit fluidisé (1 à 3) reliés l'un derrière l'autre en série, le minerai étant mené d'un réacteur à lit fluidisé (1) à l'autre réacteur à lit fluidisé (2,3) via des conduites d'alimentation (6) dans une direction, et le gaz de réduction étant amené du réacteur à lit fluidisé (3) vers l'autre réacteur à lit fluidisé (2,1) via des conduites de communication (13) pour le gaz de réduction dans la direction opposée, et
- un gazéificateur de fusion (10) selon la revendication 1, dans lequel débouche une conduite (9) d'amenée qui amène le produit de réduction provenant du réacteur à lit fluidisé (3) qui se trouve en dernier dans la direction d'écoulement du minerai, et dont le la sortie de gaz (12) débouche dans le réacteur à lit fluidisé (3) qui se trouve en dernier dans la direction d'écoulement du minerai (figure 1).
